# EUROPEAN PATENT SPECIFICATION

(11) **EP 4 485 048 B1**
(45) Date of publication and mention of the grant of the patent: **23.09.2026**
(21) Application number: 24180273.5
(22) Date of filing: 05.06.2024
(51) Int. Cl.: G02B 30/56, G02B 5/124

(54) **DISPLAY DEVICE**
ANZEIGEVORRICHTUNG
DISPOSITIF D'AFFICHAGE

(30) Priority: 29.06.2023 JP 2023106787
(43) Date of publication of application: 01.01.2025
(73) Proprietor: Alps Alpine Co., Ltd., Ota-ku, Tokyo 145-8501 (JP)
(72) Inventor: Yuza, Shingo, Iwaki-city (JP); Oshima, Chihiro, Iwaki-city (JP)
(74) Representative: Schmitt-Nilson Schraud Waibel Wohlfrom Patentanwälte Partnerschaft mbB

(56) References cited:
- CN-A- 115 826 261
- JP-A- 2021 047 440
- JP-A- 2022 150 245

## Description

The present invention relates to display devices that display images in the air using retroreflection, and relates to techniques of displaying images in the air with a wide viewing angle.

Aerial imaging by retroreflection (AIRR) has been known. For example, JP 2017-107165 A discloses a display device using two retroreflectors so that an image formed in the air can be observed with a wide viewing angle. Moreover, JP 2022-150245 A discloses a display device in which a light source and a retroreflector are positioned in a manner such that light reflected by the retroreflector through specular reflection does not enter an observation range, thereby inhibiting reduction in contrast or visibility.

What we see on a daily basis is either self-luminous or illuminated by external light, which allows us to visually perceive what we are seeing. Most of what we see is physically present. When space designing is considered, the physically present items may impair the design feature applied to the space, even if the physically present items are essential items. One of the countermeasures for this problem is use of aerial images.

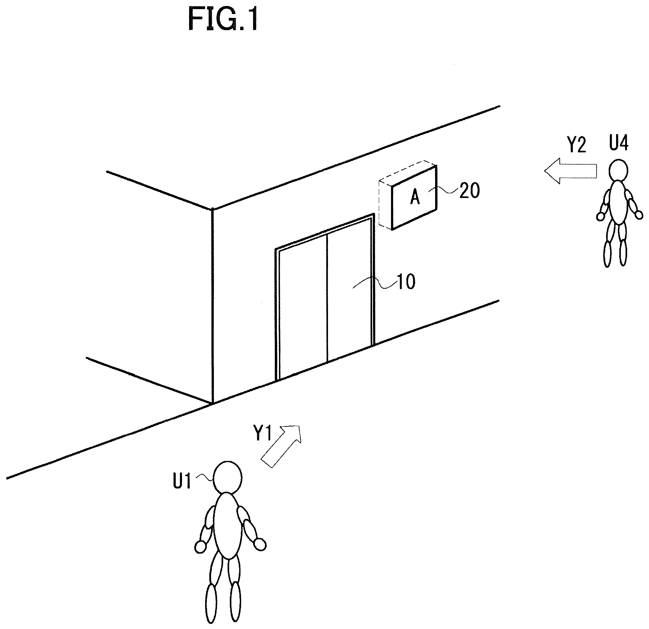

Fig. 1 is a diagram illustrating one example of a display device that displays an aerial image. As illustrated in Fig. 1, an aerial image 20 depicting an operation state of an elevator (e.g., a floor where the elevator is stopped) is displayed in the vicinity of an elevator door 10. The aerial image 20 is displayed as if it were a lantern (a lighting fixture) mounted on a wall surface, which adds a special design feature. A user U1 visually recognizes the aerial image 20 from the direction Y1 and confirms the operation state of the elevator.

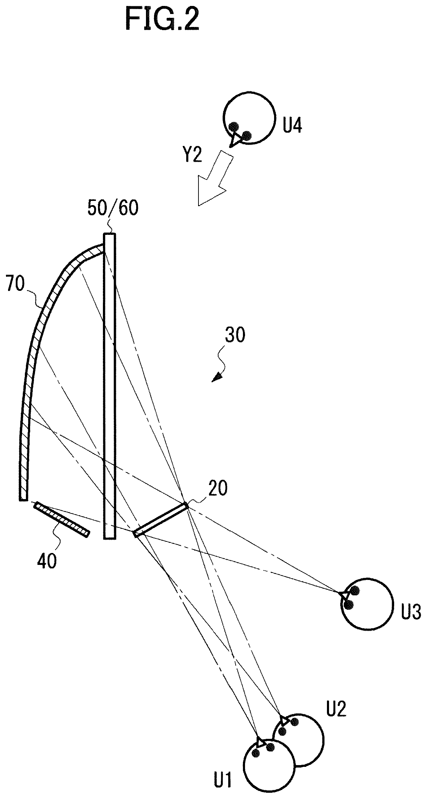

Fig. 2 is a top view illustrating a schematic configuration of a display device that displays such an aerial image. A display device 30 includes a light source (e.g., a display configured to output images)40, a beam splitter 50 configured to split incident light into reflected light and transmitted light at a predetermined ratio, a decorative sheet 60, to which a decoration or design is applied, formed on the beam splitter 50, and a retroreflection sheet 70.

As an image is displayed on the light source 40, part of the light of the image is reflected by the beam splitter 50, and the reflected light travels to the retroreflection sheet 70. The retroreflection sheet 70 is an optical member configured to reflect incident light in the same direction as entered. The light reflected by the retroreflection sheet 70 travels back to the beam splitter 50. The light transmitted through the beam splitter 50 and the decorative sheet 60 is converged and then diffused again to display an aerial image 20 ("A" in the illustrated example) as illustrated in Fig. 1.

As one of optical characteristics of the aerial image 20, the aerial image 20 is formed at a position symmetrical to the light source 40 with respect to a plane of the beam splitter 50. The aerial image 20 visible by a user is limited to the aerial image that is observed in a range in which the retroreflection sheet 70 can be viewed from the viewpoint of the user via the beam splitter 50. Specifically, the viewing angle is limited. Therefore, in Figs. 1 and 2, users U1, U2, and U3 on the front side of the aerial image 20 can visually recognize the aerial image 20 in the viewpoint direction, but the user U4 on the back side of the aerial image 20 cannot visually recognize the aerial image 20 in the view point direction Y2, and as a result, the user U4 cannot check the operation state of the elevator.

JP 2021 047440 A discloses a display device which allows observation of an image formed in the air at a wider angle. Particularly, a display device 1A which is an embodiment includes a first light source S1, a first retroreflection part 2 arranged at a position in an emission direction E1 of a first light L1 emitted from the first light source S1, and a first optical branch part 4 which reflects at least a part of the first light L1 transmitting the first retroreflection part 2 as a first reflection light L2 and allows at least a part of the first reflection light L2 which is retroreflected by the first retroreflection part 2 to pass through. According to Fig. 7, a display device 1E according to a fourth embodiment includes a first light source S1, a first retroreflector 2, a first light branching unit 4, a second light source S2, and a second retroreflector 6.

One aspect of the present invention aims to solve the above-described problems and to provide a display device capable of displaying an aerial image with a wide view angle.

The present disclosure relates to a display device according to the appended claims. Embodiments are disclosed in the dependent claims.

Other objects and further features of the present invention will be apparent from the following detailed description when read in conjunction with the accompanying drawings, in which:
Fig. 1 is a diagram illustrating an installation example of a display device available in the related art;
Fig. 2 is a top view illustrating a schematic configuration of a display device available in the related art;
Fig. 3A is a top view illustrating a schematic structure of a display device according to one of embodiments of the present invention, and Fig. 3B is a front view of the display device; and
Fig. 4 is a view illustrating an operation of the display device according to one of embodiments of the present invention.

According to one embodiment of the present invention, the retroreflection member is disposed between the plurality of light sources and the optical member, and the retroreflection member has a plurality of openings through which light from the plurality of light sources is transmitted or passed. According to a further embodiment of the present invention, with the at least three light sources arranged at mutually different angles with respect to the principal plane of the optical member, the retroreflection member has a plurality of retroreflection planes corresponding to positions of the at least three light sources, where the plurality of retroreflection planes each have a plurality of slits through which the images output by the three or more light sources are transmitted or passed through towards the optical member. According to a further embodiment of the present invention, the retroreflection member has a concave shape, and the at least three light sources are arranged in vicinity of a bottom surface and side surfaces of the concave shape of the retroreflection member.

According to aspects of the present invention, a plurality of aerial images corresponding to identical images output by a plurality of light sources (collectively referred to as a light source) are displayed. The light source is configured to output an original image of an aerial image. For example, displays (e.g., liquid crystal displays) or projectors may be used as the light source. The plurality of light sources output images in at least three directions in order to display an aerial image with a wide viewing angle. Therefore, a viewing angle of the aerial image can be widened compared to a case where a single aerial image is displayed. As a result, visibility of the aerial image can be improved.

The display device according to aspects of the present invention has a function of displaying aerial images with a wide viewing angle by AIRR. The display device according to the present invention can display aerial images with a special design feature with a wide viewing angle, while satisfying a space designing aspect. Moreover, the display device according to the present invention can be applied to a user input interface using an aerial image. It should be noted that the drawings referred to in the following description of embodiments include exaggerated representations to facilitate understanding of the invention, and do not directly represent actual shapes or scales of products.

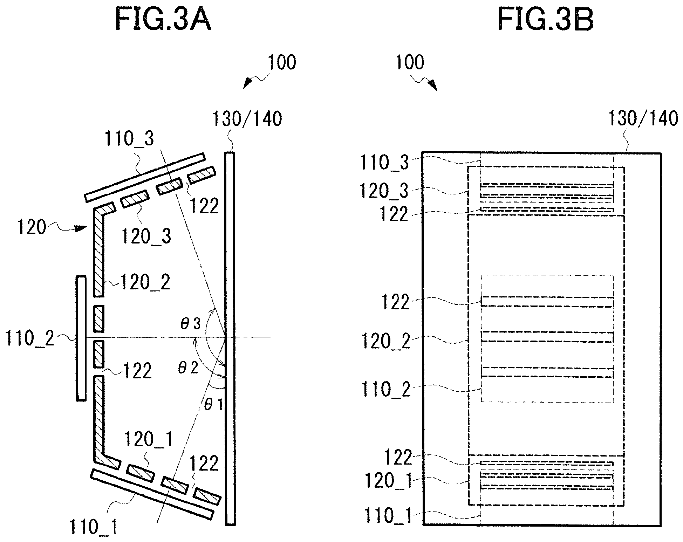

Next, embodiments of the present invention will be described with reference to the drawings. Fig. 3A is a top view illustrating a schematic configuration of the display device according to one of embodiments of the present invention, and Fig. 3B is a front view of the display device. For example, the display device is installed in the vicinity of the elevator door as illustrated in Fig. 1, and displays an aerial image.

The display device 100 of the present embodiment includes at least three light sources 110_1, 110_2, 110_3 (collectively referred to as a light source 110) disposed at mutual difference positions to output images in mutually different directions, a retroreflection sheet 120 disposed in the vicinity of the light source 110, a beam splitter 130 disposed to face the retroreflection sheet 120, and a decorative sheet 140, to which a decoration or design is applied, formed on a surface of the beam splitter 130.

The light source 110 is configured to output an original image of an aerial image. For example, displays (e.g., liquid crystal displays) or projectors may be used as the light source 110. The light sources 110_1, 110_2, and 110_3 output images in at least three directions in order to display an aerial image with a wide viewing angle. For example, the light source 110_1, the light source 110_2, and the light source 110_3 are disposed in a manner such that an optical axis of the light source 110_1 (a normal direction to the displaying surface of the display) forms an angle θ1 (= 30 degrees) with a principal plane of the beam splitter 130, the light source 110_2 forms an angle θ2 (= 90 degrees) with the principal plane of the beam splitter 130, and the light source 110_3 forms an angle θ3 (= 150 degrees) with the principal plane of the beam splitter 130.

Sizes (e.g., display sizes) of the light sources 110_1, 110_2, and 110_3 may be mutually different, but the light sources 110_1, 110_2, and 110_3 display identical images. For example, a display controller (not illustrated) controls the light source 110 so that the light sources 110_1, 110_2, and 110_3 display identical images. In the example illustrated in Fig. 1, for example, the light sources 110_1, 110_2, and 110_3 display the image of the floor where the elevator is stopped. Moreover, the light source 110 may emit light whose polarization is controlled. For example, a polarizing plate may be attached to the display surface of the light source 110 so that the light source 110 emits light whose polarization is controlled.

The retroreflection sheet 120 is an optical member that reflects incident light back in the same direction as entered. For example, the retroreflection sheet 120 may be formed with or include corner cube retroreflection elements, triangular pyramid retroreflection elements, bead retroreflection elements, or the like. The retroreflection sheet 120 provides a retroreflection plane that is at substantially 180 degrees with respect to the principal plane of the beam splitter 130 so that an aerial image can be displayed with a wide viewing angle. Specifically, the retroreflection sheet 120 has a concave shape to correspond to the positions of the light sources 110_1, 110_2, and 110_3, and includes a first retroreflection plane 120_1 substantially parallel to a principal plane of the light source 110_1, a second retroreflection plane 120_2 substantially parallel to a principal plane of the light source 110_2, and a third retroreflection plane 120_3 substantially parallel to a principal plane of the light source 110_3. In the illustrated example, a planar shape of the second retroreflection plane 120_2 is larger than the first and third retroreflection planes 120_1 and 120_3, and a planar shape of the first retroreflection plane 120_1 and a planar shape of the third retroreflection plane 120_3 are substantially the same. However, the illustrated example is merely an example. The first, second, and third retroreflection plane 120_1, 120_2, and 120_3 may be created by bending a single retroreflection member, or linking three retroreflection members together with an adhesive or the like.

A plurality of slits 122 are formed in each of the first retroreflection plane 120_1, the second retroreflection plane 120_2, and the third retroreflection plane 120_3 of the retroreflection sheet 120, and light of an image from the light source 110 disposed at the back side is passed through the slits. The number, pitch, shapes, sizes, and the like of the slits 122 are appropriately selected according to the size of the light source 110, brightness, resolution, and the like of an image output by the light source 110. In the illustrated example, the slits 122 are each a long and narrow rectangular opening (through hole) as illustrated in Fig. 3B, but the slits 122 may have other shapes, such as openings of a grid. Moreover, other than the through holes, the slits 122 may be transparent windows each formed of a transparent member that transmits light.

The beam splitter 130 is an optical member that splits incident light into transmitted light and reflected light at a predetermined ratio (the beam splitter 130 may be a half mirror). The decorative sheet 140 is adhered on a surface of the beam splitter 130. A decoration or design is applied to the decorative sheet 140, which provides a design suited to a space in which an aerial image is displayed.

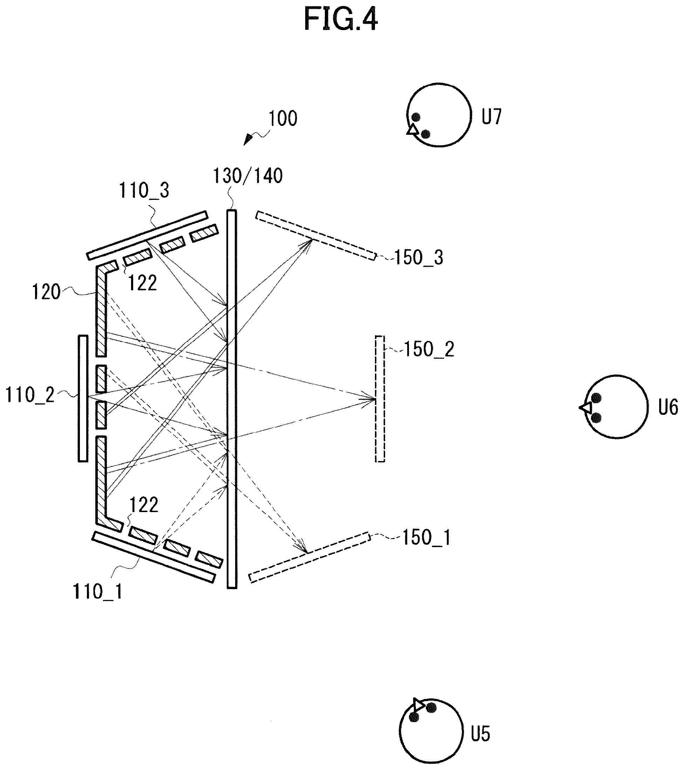

Fig. 4 is a view illustrating an aerial image display by the display device of the present embodiment. Once the identical images are displayed on the light sources 110_1, 110_2, and 110_3, respectively, light of the images passes through the slits 122 of the retroreflection sheet 120 and travels toward the beam splitter 130. The light reflected by the beam splitter 130 is incident on the retroreflection sheet 120, and the light reflected by the retroreflection sheet 120 is transmitted through the beam splitter 130 and the decorative sheet 140, thereby displaying aerial images 150_1, 150_2, and 150_5 corresponding to the images displayed on the light source 110_1, 110_2, and 110_3.

For example, light of the image displayed on the light source 110_1 is passed through the slits 122 of the first retroreflection plane 120_1, part of which is reflected by the beam splitter 130, the reflected light is incident on, for example, the second retroreflection plane 120_2 and the third retroreflection plane 120_3. The incident light is reflected back in the same direction as entered, and the reflected light is transmitted through the beam splitter 130, thereby displaying an aerial image 150_1. Light incident on the third retroreflection plane 120_3 is similarly reflected back in the direction as entered, and the reflected light is transmitted through the beam splitter 130 and the decorative sheet 140, thereby displaying the aerial image 150_1. In the manner as described above, the aerial image 150_1 corresponding to the image of the light source 110_1 is displayed.

Light of the image displayed on the light source 110_2 is passed through the slits 122 of the second retroreflection plane 120_2, part of which is reflected by the beam splitter 130, and the reflected light is incident on, for example, the first retroreflection plane 120_1, the second retroreflection plane 120_2, and the third retroreflection plane 120_3. The incident light is reflected back in the direction as entered, and the reflected light is transmitted through the beam splitter 130 and the decorative sheet 140, thereby displaying an aerial image 150_2. In the manner as described above, the aerial image 150_2 corresponding to the image of the light source 110_2 is displayed.

In a similar manner, light of the image displayed on the light source 110_3 is passed through the slits 122 of the third retroreflection plane 120_3, part of which is reflected by the beam splitter 130, and the reflected light is reflected by the retroreflection sheet 120, thereby displaying an aerial image 150_3 corresponding to the image of the light source 110_3.

The aerial images 150_1, 150_2, and 150_3 and the images of the light source 110_1, 110_2, and 130_3 are line-symmetric with respect to the beam splitter 130. The user U5 in front of the light source 110_1 can visually recognize the aerial image 150_1 in the viewpoint direction. The user U6 in front of the light source 110_2 can visually recognize the aerial image 150_2 in the view point direction. The user U7 in front of the light source 110_3 can visually recognize the aerial image 150_3 in the viewpoint direction.

According to the present embodiment, a plurality of the light sources outputting images in a plurality of directions are used to display a plurality of aerial images corresponding to the images of the plurality of the light sources so that a viewing angle of the aerial image can be increased, and visibility of the aerial image can be improved. Even if a viewing angle of a single aerial image is widened, the displayed contents are not easily recognized by a person who views the aerial image in a position other than the front position. However, in the present embodiment, a plurality of aerial images create a plurality of front positions facing the aerial images, thereby increasing directions from which the aerial image is easily visually recognized.

In the embodiment described above, the example where three light sources are used is described. However, the number of light sources may be four or more. In such case, a plurality of light sources are arranged in a manner such that optical axes of the light sources used are at different angles with respect to a principal plane of the beam splitter. The number of aerial images increases according to the increase in the number of the light sources, thus the aerial image is more easily viewed from the front so that visibility of the aerial image is improved. In the embodiment described above, the example where the three displays are used as the three light sources is described. However, for example, a display is used as one light source, and optical devices that duplicate the image displayed on the display by mirrors or the like may be used as the other light sources.

In the embodiment described above, the example of the concave-shaped retroreflection sheet having a plurality of retroreflection planes is described. However, the retroreflection sheet may have a configuration other than the above, as long as a shape of the retroreflection sheet allows to provide a retroreflection plane in a range of approximately 180 degrees with respect to a principal plane of the beam splitter. In the embodiment described above, moreover, the example where the single layer constitutes the retroreflection sheet is described. However, the retroreflection sheet may be formed of a plurality of retroreflection sheets. Moreover, a retardation film, such as a λ/4 plate, may be disposed on a surface of the retroreflection sheet so that the beam splitter transmits or reflects light whose polarization is controlled.

In the embodiment described above, the example where the display device is used in the space such as an elevator hall or the like is described. The described application is merely an example, and the display device may be applied in other spaces. Moreover, the display device of the present embodiment can be applied to a user interface. For example, an aerial image can be applied as input buttons of computer devices, of in-vehicle electronic devices, of ATM of banks and the like, of ticket machines at stations and the like, of elevators, and the like.

Although the preferred embodiments of the present invention have been described in detail, the present invention is not limited to the specific embodiments, and various modifications and changes can be made within the scope of the claims.

## Claims

1. A display device (100) capable of displaying an aerial image using retroreflection, the display device comprising:
a plurality of at least three light sources (110_1, 110_2, 110_3) configured to output identical original images of an aerial image in mutually different directions;
an optical member (130) that splits incident light into reflected light and transmitted light at a predetermined ratio, wherein the at least three light sources (110_1, 110_2, 110_3) are arranged in a manner such that optical axes of the light sources are at different angles with respect to a principal plane of the optical member (130); and
a retroreflection member (120) configured to provide a retroreflection plane in a range of approximately 180 degrees with respect to a principal plane of the optical member (130),
wherein light of the identical images output from the plurality of light sources (110_1, 110_2, 110_3) is incident on the retroreflection member (120) via the optical member (130), and the light reflected by the retroreflection member (120) is transmitted through the optical member (130), thereby displaying a plurality of aerial images (150_1, 150_2, 150_3) corresponding to the identical images output by the plurality of light sources (110_1, 110_2, 110_3) in order to display the aerial image with a wide viewing angle.

2. The display device according to claim 1,
wherein the retroreflection member (120) is disposed between the plurality of light sources (110_1, 110_2, 110_3) and the optical member (130), and the retroreflection member has a plurality of openings (122) through which light from the plurality of light sources is transmitted or passed.

3. The display device according to claim 1 or 2,
wherein the retroreflection member (120) has a plurality of retroreflection planes corresponding to positions of the at least three light sources (110_1, 110_2, 110_3), where the plurality of retroreflection planes each have a plurality of slits (122) through which light of the identical images output by the three or more light sources (110_1, 110_2, 110_3) are transmitted or passed through towards the optical member (130).

4. The display device according to claim 3,
wherein the retroreflection member (120) has a concave shape, and the at least three light sources (110_1, 110_2, 110_3) are arranged in a vicinity of a bottom surface and side surfaces of the concave shape of the retroreflection member.

## Patentansprüche

1. Anzeigevorrichtung (100), die in der Lage ist, ein Luftbild unter Verwendung von Retroreflexion anzuzeigen, wobei die Anzeigevorrichtung aufweist:
eine Mehrzahl von mindestens drei Lichtquellen (110_1, 110_2, 110_3), die dazu ausgelegt sind, identische Originalbilder eines Luftbilds in voneinander unterschiedlichen Richtungen auszugeben;
ein optisches Element (130), das einfallendes Licht in einem vorbestimmten Verhältnis in reflektiertes Licht und durchgelassenes Licht aufteilt, wobei die mindestens drei Lichtquellen (110_1, 110_2, 110_3) derart angeordnet sind, dass optische Achsen der Lichtquellen unterschiedliche Winkel in Bezug auf eine Hauptebene des optischen Elements (130) haben; und
ein Retroreflexionselement (120), das dazu ausgelegt ist, eine Retroreflexionsebene in einem Bereich von etwa 180 Grad in Bezug auf eine Hauptebene des optischen Elements (130) bereitzustellen,
wobei Licht der identischen Bilder, die von der Mehrzahl von Lichtquellen (110_1, 110_2, 110_3) ausgegeben werden, über das optische Element (130) auf das Retroreflexionselement (120) einfällt und das von dem Retroreflexionselement (120) reflektierte Licht durch das optische Element (130) durchgelassen wird, wodurch eine Mehrzahl von Luftbildern (150_1, 150_2, 150_3) angezeigt wird, die den von der Mehrzahl von Lichtquellen (110_1, 110_2, 110_3) ausgegebenen identischen Bildern entsprechen, um das Luftbild mit einem weiten Blickwinkel anzuzeigen.

2. Anzeigevorrichtung nach Anspruch 1,
wobei das Retroreflexionselement (120) zwischen der Mehrzahl von Lichtquellen (110_1, 110_2, 110_3) und dem optischen Element (130) angeordnet ist und das Retroreflexionselement eine Mehrzahl von Öffnungen (122) hat, durch die Licht von der Mehrzahl von Lichtquellen durchgelassen oder passieren gelassen wird wird.

3. Anzeigevorrichtung nach Anspruch 1 oder 2,
wobei das Retroreflexionselement (120) eine Mehrzahl von Retroreflexionsebenen hat, die Positionen der mindestens drei Lichtquellen (110_1, 110_2, 110_3) entsprechen, wobei die Mehrzahl von Retroreflexionsebenen jeweils eine Mehrzahl von Schlitzen (122) hat, durch die Licht der identischen Bilder, die von den drei oder mehr Lichtquellen (110_1, 110_2, 110_3) ausgegeben werden, in Richtung des optischen Elements (130) durchgelassen oder passieren gelassen wird wird.

4. Anzeigevorrichtung nach Anspruch 3,
wobei das Retroreflexionselement (120) eine konkave Form hat und die mindestens drei Lichtquellen (110_1, 110_2, 110_3) in der Nähe einer Bodenfläche und von Seitenflächen der konkaven Form des Retroreflexionselements angeordnet sind.

## Revendications

1. Dispositif d'affichage (100) apte à afficher une image aérienne au moyen de la rétro-réflexion, le dispositif d'affichage comprenant :
une pluralité d'au moins trois sources lumineuses (110_1, 110_2, 110_3) configurées pour délivrer des images originales identiques d'une image aérienne dans des directions mutuellement différentes ;
un élément optique (130) qui divise la lumière incidente en lumière réfléchie et lumière transmise selon un rapport prédéterminé, les au moins trois sources lumineuses (110_1, 110_2, 110_3) étant disposées de telle sorte que des axes optiques des sources lumineuses présentent des angles différents par rapport à un plan principal de l'élément optique (130) ; et
un élément de rétro-réflexion (120) configuré pour fournir un plan de rétro-réflexion dans une plage d'environ 180 degrés par rapport au plan principal de l'élément optique (130),
la lumière des images identiques délivrées par la pluralité de sources lumineuses (110_1, 110_2, 110_3) étant incidente sur l'élément de rétro-réflexion (120) au travers de l'élément optique (130), et la lumière réfléchie par l'élément de rétro-réflexion (120) étant transmise au travers de l'élément optique (130), affichant ainsi une pluralité d'images aériennes (150_1, 150_2, 150_3) correspondant aux images identiques délivrées par la pluralité de sources lumineuses (110_1, 110_2, 110_3) afin d'afficher l'image aérienne avec un large angle de vue.

2. Dispositif d'affichage selon la revendication 1,
dans lequel l'élément de rétro-réflexion (120) est disposé entre la pluralité de sources lumineuses (110_1, 110_2, 110_3) et l'élément optique (130), et dans lequel l'élément de rétro-réflexion présente une pluralité d'ouvertures (122) à travers lesquelles la lumière provenant de la pluralité de sources lumineuses est transmise ou passe.

3. Dispositif d'affichage selon la revendication 1 ou 2,
dans lequel l'élément de rétro-réflexion (120) présente une pluralité de plans de rétro-réflexion correspondant à des positions des au moins trois sources lumineuses (110_1, 110_2, 110_3), la pluralité de plans de rétro-réflexion présentant chacun une pluralité de fentes (122) à travers lesquelles la lumière des images identiques délivrées par les trois sources lumineuses ou davantage (110_1, 110_2, 110_3) est transmise ou passe vers l'élément optique (130).

4. Dispositif d'affichage selon la revendication 3,
dans lequel l'élément de rétro-réflexion (120) présente une forme concave, et dans lequel les au moins trois sources lumineuses (110_1, 110_2, 110_3) sont disposées à proximité d'une surface de fond et de surfaces latérales de la forme concave de l'élément de rétro-réflexion.
